# EUROPÄISCHE PATENTSCHRIFT

(11) **EP 2 242 646 B1**
(45) Veröffentlichungstag und Bekanntmachung des Hinweises auf die Patenterteilung: **28.09.2011**
(21) Anmeldenummer: 08864703.7
(22) Anmeldetag: 22.12.2008
(51) Int. Cl.: B32B 21/06, B44C 5/04, B32B 29/00, D21H 27/26, D21H 27/28

(54) **VERFAHREN ZUR HERSTELLUNG EINES LAMINATS**
METHOD FOR PRODUCING A LAMINATE
PROCÉDÉ DE FABRICATION D'UN STRATIFIÉ

(30) Priorität: 21.12.2007 DE 102007062941
(43) Veröffentlichungstag der Anmeldung: 27.10.2010
(73) Patentinhaber: Surface Technologies GmbH & Co. KG, 15837 Baruth (DE)
(72) Erfinder: BUHLMANN, Carsten, 15834 Rangsdorf (DE)
(74) Vertreter: Lippert, Stachow & Partner
(86) Internationale Anmeldenummer: PCT/EP2008/068171
(87) Internationale Veröffentlichungsnummer: WO 2009/080813

(56) Entgegenhaltungen:
- EP-A- 0 519 242
- EP-A- 1 420 126
- EP-A- 1 454 763
- EP-A- 1 749 676
- EP-A- 1 820 640
- WO-A-02/45955
- WO-A-2005/051661

## Beschreibung

Die Erfindung betrifft ein Verfahren zur Herstellung eines Laminats, insbesondere eines Laminats mit einem Träger auf der Basis von Holzwerkstoffen, mit einem Dekor und Schichten, die Aminoplaste enthalten.

Solche Laminate werden vielfältig gebraucht, beispielsweise für Fußböden, Wand- und Deckenverkleidungen, Arbeitsplatten und Möbel. Das Dekor kann beispielsweise einen anderen Werkstoff, wie Holz, Keramik, Natur- oder Kunststein imitieren oder künstlerische oder praktische Gesichtspunkte berücksichtigen. Gewöhnlich wird das Dekor von einer mehr oder weniger durchsichtigen duroplastischen Deckschicht vor Verschleiß geschützt. Es ist üblich, die Oberfläche dieser Deckschicht mit einer Struktur zu versehen, die den durch das Dekor imitierten Werkstoff entspricht und die als Synchronpore bezeichnet wird.

Die bisherige technische Entwicklung hat im Wesentlichen zu zwei unterschiedlichen Materialgruppen für die Deckschichten geführt. So genannte Lackschichten werden aus Zusammensetzungen gebildet, die durch Wärme und/oder Strahlung polymerisierbare und/oder vernetzbare und dadurch aushärtbare Komponenten enthalten, wie beispielsweise Acrylate, Epoxide, Maleimide.

Die zweite für die Deckschichten verwendete Materialgruppe umfasst die so genannten Aminoplaste. Hierunter versteht man Polykondensationsprodukte aus Carbonylverbindungen, insbesondere Formaldehyd, und Aminogruppen enthaltenen Verbindungen, wie zum Beispiel Harnstoff, Melamin, Urethan. Zur Herstellung der Schichten im Laminat werden üblicherweise wässrige Lösungen von Kondensationsprodukten aus Carbonylverbindung und Amin mit einem Überschuss der Carbonylverbindung eingesetzt, die beim Trocknen und Erhitzen zu einer duroplastischen Struktur vernetzen. Da dabei sowohl das als Lösungsmittel vorhandene als auch das bei der Kondensationsreaktion entstehende Wasser in Form von Dampf entweicht, muss die Aushärtung zumindest im wesentlichen in einer Presse vorgenommen werden, damit das Produkt die gewünschte Festigkeit und Oberflächengüte erhält.

Laminatschichten aus Aminoplasten haben zwar ausgezeichnete Beständigkeit gegen Licht, Verschmutzung, verschiedene Lösungsmittel und Hitzeeinwirkung, sind jedoch vergleichsweise spröde. Daher ist es seit langem üblich, sie durch Faserstoffe, wie Papier und/oder Fliese aus α-Zellulose, zu verstärken. Dies erfolgt beispielsweise, indem das Dekor auf ein Papier gedruckt wird, das danach mit Aminoplast imprägniert wird und indem für die Deckschicht ein so genanntes Overlay aus ebenfalls mit Aminoplast beladenem Papier verwendet wird. Nach dem Pressen und Aushärten bleibt jedoch der Träger aus Zellulosefasern in der Deckschicht bestehen und kann die Erkennbarkeit des Dekors beeinträchtigen. Weitere Nachteile des Overlay-Papiers sind die höheren Kosten durch Herstellung und Vorratshaltung sowie die begrenzte Haltbarkeit des mit Aminoplast imprägnierten Papiers. EP 21588 schlägt daher vor, ein mit Polyvinylalkohol modifiziertes Melamin-Formaldehyd-Harz ohne Zellulose als Deckschicht zu verwenden. Dabei handelt es sich jedoch um ein Spezialprodukt mit erhöhten Kosten für Herstellung und Lagerung und begrenzter Haltbarkeit.

Um die Abriebfestigkeit des fertigen Laminats zu steigern, was insbesondere für die Verwendung als Fußbodenbelag von Bedeutung ist, wird seit längerem ein feinteiliger harter Feststoff, wie Siliziumdioxid, Aluminiumoxid, Siliziumcarbid, Bornitrid, in eine oder mehrere der die Laminatstruktur aufbauenden Schichten einverleibt. Beispielsweise kann dieser harte Feststoff in das mit Harz oder Lack getränkte Dekorpapier oder Overlay-Papier inkorporiert werden (z. B. WO 2005/042644-A1), oder bei der Herstellung der Schichtstruktur als Dispersion aufgetragen (z. B. DE 20 2005 008 692 U2) oder trocken aufgestreut werden (EP 12 49 322, WO 2005/042644-A1). Es ist jedoch unerwünscht, dass die Feststoffteilchen aus der äußersten Schicht der Laminatstruktur herausragen, weil dadurch Aussehen und Haptik des Produkts beeinträchtigt und Bearbeitungseinrichtungen, beispielsweise Pressen, beschädigt werden können.

In der Entwicklung der jüngsten Vergangenheit werden daher für die Ausbildung der Laminatschichten strahlungshärtende Lacke gegenüber Aminoplasten bevorzugt. So schlägt die WO 2007/042258 zur kostengünstigen Schaffung einer Platte mit dekorativer Oberfläche und hohen Abriebwerten vor, auf die dekorative Oberfläche einen Lack aufzutragen, abriebfeste Partikel darauf zu bringen, eine weitere Lackschicht aufzutragen und die aufgetragenen Lackschichten zu härten. Die Härtung der Lacke erfolgt vorzugsweise durch UV-Strahlung. Während der Härtung sind die Lackschichten mit einer strukturgebenden Folie abgedeckt, die auch Luftsauerstoff fernhält, der den Härtungsvorgang beeinträchtigen würde.

Lackbeschichtete Laminate sind auch in der Literatur beschrieben (Parkettmagazin 5/2007, S. 49 bis 51). Solche Laminate weisen über dem aufgedruckten Dekor mehrere Lackschichten auf; zunächst solche, die Korund enthalten, danach Schleif- und Spachtellack, einen Decklack und eine Deckpore. Ein Verfahren und eine Vorrichtung zur Herstellung solcher Laminate sind in WO 2006/037644-A2 offenbart. Die Vorrichtung umfasst mehrere Bearbeitungsstationen, die ihrerseits jeweils eine Auftragswalze und eine Nachbearbeitungsstation, in der Warmluft oder Strahlung auf die aufgetragene Lackschicht zur zumindest teilweisen Trocknung und Aushärtung einwirkt, umfassen. Durch das Aufdrucken des Dekors und die Verwendung von Grundierungs- und Deckschichten aus strahlungshärtendem Lack brauchen diese Laminate keine Zelluloseanteile mehr zu enthalten. Die Lackoberflächen der beschriebenen Laminate sollen weicher sein als die Oberflächen von Melaminharz-Laminaten und sich wärmer anfühlen.

DE 20 2005 008 692 U2 beschreibt ein Paneel aus Holzwerkstoff mit Oberflächenbeschichtung aus einer Grundierung und darauf aufbauend mit mindestens einer Lackschicht. Zur Vermeidung unerwünschter Strukturen in der Oberfläche, wie eine Walzstruktur, oder von Apfelsinenhaut, wird vorgeschlagen, den Lack in mehreren dünnen Schichten aufzutragen, wobei die jeweils bereits aufgetragene Schicht angeliert, d.h. teilweise vernetzt, wird.

Gleichwohl besitzen die Laminate auf Aminoplastbasis Vorteile gegenüber solchen mit Lackschichten. So betragen zurzeit die Rohstoffkosten für Lacke ein Mehrfaches der Kosten für Aminoplaste. Außerdem sind die Oberflächengüte und die innere Fehlerfreiheit durch den notwendigen Pressvorgang besser zu kontrollieren, und der Aushärtungsprozess wird durch den Luftsauerstoff nicht beeinflusst. Daher besteht ein Bedürfnis, das Verfahren zur Herstellung von dekorativen Laminaten so weiterzubilden, dass es kostengünstiger und flexibler ausgeführt werden kann und zu Laminaten mit verbesserten Eigenschaften führt.

EP 472036 offenbart dekorative Laminate, bei denen ein Gemisch mit Melamin-Formaldehyd-Harzen und Aluminiumoxidteilchen auf Dekorpapier aufgetragen wird. Das so imprägnierte Papier wird wiederum in das Gemisch oder in das reine Melamin-Formaldehyd-Harz eingetaucht, wobei die Auftragsmenge mittels geeigneter Mittel, beispielsweise einer Abstreifwalze, dosiert wird. Danach wird das Laminat durch Druck und Wärme verfestigt. Mit diesem so genannten "nass-in-nass"-Verfahren erhält man Laminatoberflächen mit verbesserter Festigkeit gegenüber mechanischer Beanspruchung. Es lässt sich jedoch nicht sicher vermeiden, dass Aluminiumoxidteilchen aus der Oberfläche herausragen.

Ferner offenbart EP 1 454 763 A2 ein Verfahren zum Veredeln einer Holz- oder Holzwerkstoffplatte.

Die Erfindung stellt sich die Aufgabe, ein Verfahren anzugeben, mit dem dekorierte Laminate mit einem plattenförmigen Kern aus Holz oder Holzwerkstoff, einer Dekorschicht auf mindestens einer Seite des Kerns und einer Deckschicht aus einem Aminoplast auf der Dekorschicht ohne Verwendung eines zellulosehaltigen Overlays mit hervorragender Qualität und ausgezeichneten mechanischen Eigenschaften auf einfache und wirtschaftliche Art hergestellt werden können.

Diese Aufgabe wird durch ein Verfahren nach dem Hauptanspruch gelöst.

Es wurde nämlich gefunden, dass die mechanischen Eigenschaften des Aminoplastes in der Deckschicht auch ohne Anwendung eines zellulosehaltigen Overlays hervorragend sind, wenn die Deckschicht aus einer wässrigen Lösung des Aminoplastes in mehreren Teilschichten aufgetragen wird, die jeweils nach dem Auftragen angetrocknet werden. Durch dieses Antrocknen wird die Viskosität der aufgetragenen Teilschicht infolge der Zunahme des Feststoffgehalts so weit erhöht, dass beim Auftragen der nächsten Teilschicht die darunter liegenden Teilschichten nicht zerstört werden. Dagegen findet bei diesem Antrocknen noch keine Aushärtung und Vernetzung durch Polykondensation statt.

Erfindungsgemäß werden mindestens drei Teilschichten, bevorzugt vier bis sechs Teilschichten, aufgetragen.

Die Begriffe Aminoplast und Melamin-Formaldehyd-Harz werden zur Vereinfachung im Rahmen dieser Anmeldung sowohl für die Lösungen von Vorstufen mit geringem Polymerisationsgrad als auch für die getrockneten und wärmebehandelten ausgehärteten Produkte verwendet. Dem Fachmann wird aus dem Kontext ersichtlich, was im Einzelnen gemeint ist.

Der plattenförmige Kern besteht aus Holz oder einem Holzwerkstoff, vorzugsweise mitteldichte (MDF) oder hochdichte (HDF) Faserplatte. Bevorzugte Maße sind etwa 2 x 3 m bei einer Dicke von etwa 5 bis 25 mm.
Zum Auftragen der Teilschichten kann jedes bekannte Beschichtungsverfahren, wie Vorhangbeschichten, Sprühbeschichten, Tauchbeschichtung, angewendet werden. Besonders bevorzugt ist das Walzenbeschichtungsverfahren, wobei die Auftragsmenge mit Rakeln und/oder Rasteroberflächen gesteuert werden kann.

Das Antrocknen der Schichten erfolgt bevorzugt in einem Strom von Warmluft und/oder durch IR-Strahlung. Es ist in jedem Fall günstig, durch einen über die Platte geführten Luftstrom den aus der Teilschicht entweichenden Wasserdampf zu entfernen. Die Temperatur an der Oberfläche der Teilschicht sollte nicht mehr als 20 K über der Umgebungstemperatur liegen, damit keine Aushärtung eintritt.

Von den bekannten Aminoplasten werden Melamin-Formaldehyd-Harze besonders bevorzugt. Geeignete Produkte sind handelsüblich. Erfindungsgemäß verwendbar sind aber auch andere Aminoplaste wie beispielsweise Harnstoff-Formaldehyd-Harze. Es ist vorteilhaft, eine Lösung des Aminoplastes mit mindestens 60 Gewichtsprozent Feststoff zu verwenden. Durch das Antrocknen sollte der Feststoffgehalt in der aufgetragenen Teilschicht auf einen Wert über 80 Gewichtsprozent ansteigen. Die Viskosität der aufgetragenen Lösung des Aminoplastes liegt bevorzugt zwischen 100 und 200 mPas. Besonders bevorzugt ist es, die erste Teilschicht mit geringerer Viskosität und die darauf folgenden Teilschichten mit höherer Viskosität aufzutragen, das heißt, dass die Viskosität mit der Schichtfolge ansteigt. Die Viskosität der Aminoplastlösung kann auch mit Verdickungmitteln, beispielsweise Polysacchariden wie Xanthangummi, höher eingestellt werden.

Bei einer bevorzugten erfindungsgemäßen Ausführungsform werden mit der ersten Teilschicht Teilchen eines harten Feststoffs aufgetragen. Diese Teilchen sind nach dem vollständigen Auftrag der Deckschicht in diese eingebettet. Nach dem Aushärten des Laminats bewirken sie eine Verbesserung der Abriebfestigkeit. Es ist möglich, diese Teilchen in der Lösung des Aminoplastes für die erste Teilschicht zu dispergieren. Dabei ist zu berücksichtigen, dass die Teilchen zu einem erhöhten Verschleiß der Auftragsvorrichtung führen können. Beispielsweise kann wegen der höheren Verschleißfestigkeit eine Auftragswalze aus Keramik verwendet werden. Vorteilhaft können die Teilchen auch vor dem Antrocknen der ersten Teilschicht auf diese aufgestreut werden.

Es kann zweckmäßig sein, auch noch in die zweite Teilschicht Feststoffteilchen zu inkorporieren, solange diese durch die folgenden Teilschichten sicher abgedeckt werden.

Als harte Feststoffe kommen insbesondere Aluminiumoxid, Siliziumdioxid, Siliziumcarbid und Bornitrid infrage. Bei der Auswahl kann man die Farbe des Feststoffs so wählen, dass sie sich nicht störend vom Dekor abhebt. Die Teilchengröße kann 30 bis 250 µm betragen. Eine bevorzugte mittlere Teilchengröße des harten Feststoffs liegt zwischen 180 und 220 µm.

Die Menge des verwendeten harten Feststoffes liegt zweckmäßig zwischen etwa 10 und 50, bevorzugt 15 bis 20 g pro Quadratmeter.

Die Dicken der Teilschichten werden bevorzugt so bemessen, dass die erste Teilschicht dünner ist als die mittlere Teilchengröße des Feststoffs. In diesem Fall ragen die Teilchen zunächst aus der Teilschicht heraus. Durch das Antrocknen werden sie jedoch in ihrer vertikalen Lage fixiert. Die folgenden Teilschichten füllen nun die Zwischenräume zwischen den Teilchen aus und legen sich auf die zuvor aufgetragenen Teilschichten. Nach Auftrag aller Teilschichten ist dann die Dicke der gesamten Deckschicht größer als die Teilchengröße, so dass die Teilchen vollständig in der Deckschicht eingebettet sind. Es ist nun nicht mehr möglich, dass einzelne Teilchen in unerwünschter Weise aus der Deckschicht nach außen herausragen.

Die Teilschichten können jeweils gleich dick oder verschieden dick sein. Ein geeigneter Bereich der Schichtdicke liegt zwischen 20 und 60 µm, entsprechend einem Nassauftragsgewicht von etwa 40 bis 120 g pro Quadratmeter.

Zur Verbesserung des Kratzerschutzes können zumindest der letzten, außen liegenden Teilschicht Nanoteilchen inkorporiert werden. Diese bestehen bevorzugt aus Aluminiumoxid oder Siliziumdioxid und haben bevorzugt eine Größe von 5 bis 100 nm. Die Verwendung von solchen Nanoteilchen zum Kratzerschutz ist an sich bekannt. Da sie jedoch nur an der Oberfläche wirken, ist es wirtschaftlich, sie nur in der äußeren Teilschicht anzuwenden.

Zum Kratzerschutz können auch Schmiermittel, wie Polyvinylalkohol oder Polyethylenglykolstearate, allein oder in Kombination mit Nanoteilchen, zumindest in die äußerste Teilschicht einverleibt werden.

Es ist grundsätzlich möglich, vor dem Auftragen der Deckschicht in bekannter Weise ein imprägniertes Dekorpapier auf einer Seite des plattenförmigen Kerns anzubringen. Bevorzugt wird jedoch ein Dekorpapier oder ein einfarbiges Papier, jeweils ohne Imprägnierung, auf eine zuvor auf dem Kern angebrachten Schicht aus flüssigem Leim aufgelegt. Dieses Papier kann mittels einer Kalanderwalze am Kern angedrückt und befestigt werden. Vorteilhaft ist der Leim durch Wärme aushärtbar. Er kann dann entweder durch die beheizte Kalanderwalze oder während des Aushärtens des Aminoplastes der Deckschicht unter Druck und Wärme am Schluss des Verfahrens ausgehärtet werden. Als Leim brauchbar ist beispielsweise eine Kombination des Harnstoff-Formaldehydleims 1206 mit dem Härter 2547 der Firma Akzo Nobel. Hierbei werden vorteilhaft zunächst eine dünne Schicht des Härters und danach der Leim in der notwendigen Schichtdicke aufgetragen, worauf unmittelbar das Papier aufgelegt werden kann. Vorteilhaft wird dabei das Dekorpapier oder einfarbige Papier von der Rolle verarbeitet, was einfacher als die Handhabung von Blattmaterial ist.

Wenn ein einfarbiges, insbesondere weißes Papier verwendet wurde, kann dies als Untergrund für das Aufdrucken eines Dekors dienen. Es ist dann nicht mehr notwendig, andere Beschichtungen, wie Primer oder Walzgrund, als Druckträger anzubringen, wie im Stand der Technik beschrieben. Zum Bedrucken kann jedes bekannte Verfahren, beispielsweise Tiefdruck, indirekter Tiefdruck, Flexodruck, Offsetdruck angewendet werden. Bevorzugt wird ein digitales Druckverfahren angewendet, bei dem das Dekor in digitaler Form abgespeichert verwendet werden kann, insbesondere ein Tintenstrahl-Druckverfahren.

Mit dem beschriebenen Verfahren lässt sich ein dekoriertes Laminat herstellen, das entweder auf einer oder auf beiden Seiten des plattenförmigen Kerns je eine Dekorschicht und eine Deckschicht aufweist. In den meisten Fällen reicht es jedoch aus, nur auf einer Seite des Kerns eine Dekorschicht und eine Deckschicht vorzusehen. In diesem Falle wird gewöhnlich auf der anderen Seite ein so genannter Gegenzug angebracht, um eine Verformung des Laminats bei Änderung von Temperatur und Luftfeuchtigkeit infolge der unterschiedlichen Reaktionen von Kern und Aminoplast zu vermeiden. Besonders wirtschaftlich wird das erfindungsgemäße Verfahren ausgeführt, wenn dieser Gegenzug gleichzeitig mit dem Anbringen der Dekorschicht und dem Auftragen der Deckschicht angebracht wird. Dies kann vorteilhaft geschehen, indem auch der Gegenzug in Form mehrerer Teilschichten aus Aminoplast aufgetragen wird, wobei jede Teilschicht vor dem Auftragen der nächsten Teilschicht zumindest soweit angetrocknet wird, dass sie durch den Auftrag der nächsten Schicht nicht zerstört wird. Besonders vorteilhaft können die Teilschichten des Gegenzugs jeweils gleichzeitig mit den Teilschichten der Deckschicht aufgetragen und angetrocknet werden.

Zur weiteren Stabilisierung des Gegenzugs kann vor dem Auftragen auf der der Dekorschicht gegenüberliegenden Seite des plattenförmigen Kerns eine Papierschicht angebracht werden. Vorteilhaft erfolgt dies gleichzeitig mit und in gleicher Weise wie die Anbringung des Dekorpapiers oder einfarbigen Papiers auf der Dekorseite des Kerns.

Nach dem Anbringen der Dekorschicht, der vollständigen Deckschicht und gegebenenfalls des Gegenzugs auf dem plattenförmigen Kern wird das Laminat unter Druck erhitzt. Dadurch findet eine Vernetzung und Aushärtung des Aminoplastes statt. Besonders geeignete Vorrichtungen hierfür sind einerseits Kurztaktpressen (KT-Pressen) und andererseits Doppelbandpressen. Typische Werte für Druck und Temperatur am Werkstück sind etwa 20 bis 60 kN/cm² und 160 bis 180 °C. Während des Pressens wird auch durch die das Laminat berührende Oberfläche des Presswerkzeugs die Oberflächenstruktur des Laminats ausgebildet. Hierzu können gleichförmige oder endlose Prägefolien in die Presse eingelegt werden. Die Oberflächenstruktur kann in bekannter Weise mit dem Dekor der Dekorschicht in Übereinstimmung gebracht werden. Dies wird dadurch erleichtert, dass das Dekor nicht durch Imprägnieren des Papiers schrumpft. Je nach Prägefolie können sowohl hochglänzende als auch matte Oberflächen, sowie mit einem Naturstoff (Holz, Stein usw.) imitierenden Dekor übereinstimmende positive oder negative Poren geformt werden.

Das Dekorpapier oder einfarbige Papier wird in der Regel beim Anbringen auf dem plattenförmigen Kern mittels eines flüssigen Leims zunächst nicht vom Leim durchtränkt. Ein räumlich begrenztes Durchschlagen des Leims könnte sogar das Erscheinungsbild des Dekors im fertigen Laminat stören. Erst beim Pressen der Laminatstruktur unter Erwärmung wird überraschenderweise das Papier sicher und gleichmäßig vom Aminoplast imprägniert und mit Kern und Deckschicht zu einer festen Struktur vereinigt. Dadurch besteht eine eindeutige Beziehung zwischen dem Dekor und der Oberflächenstruktur der Prägefolie, so dass beispielsweise für den digitalen Druck des Dekors der gleiche Datensatz wie bei der Herstellung der Prägefolie verwendet werden kann.

Die nach dem erfindungsgemäßen Verfahren hergestellten dekorierten Laminate zeichnen sich durch hohe Festigkeit, angenehme Haptik und klare Erkennbarkeit des Dekors aus.

Das erfindungsgemäße Verfahren ermöglicht insbesondere eine kostengünstige und flexiblere Herstellung dekorierter Laminate. Insbesondere der Ersatz des zellulosehaltigen Overlays durch mehrere Teilschichten von Aminoplast senkt die Materialkosten, weil nun kein vorgelagerter Arbeitsgang zur Imprägnierung des Overlays mehr erforderlich ist und die kontrollierte Lagerhaltung des nur begrenzt lagerfähigen Overlays wegfällt. Auch die Rüstzeiten bei Produktwechseln werden verkürzt, wodurch die Produktion flexibler organisiert und der Lagerbestand an fertigem Produkt reduziert werden kann. Die Verwendung von Dekorpapier oder einfarbigem Papier ohne Imprägnierung ermöglicht die Verwendung von kostengünstigeren Papieren mit geringerer Grammatur. Eine entsprechende Vereinfachung und Kostensenkung lässt sich beim Gegenzug realisieren, insbesondere wenn dieser gleichzeitig mit der Deckschicht aufgetragen wird.

### Ausführungsbeispiel 1

MDF-Platten von etwa 2 x 3 m Größe werden gereinigt, geglättet und temperiert. Mittels einer Walzenbeschichtungsanlage wird ein saurer Härter für Harnstoff-Formaldehydleim (Härter 2547-Akzo Nobel) bei Umgebungstemperatur mit einem Auftragsgewicht von 5 bis 8 g/Quadratmeter aufgetragen und mit einem IR-Strahler leicht angetrocknet, so dass die Schicht dem folgenden Walzenauftrag von Leim (Harnstoff-Formaldehydleim 1206-Akzo Nobel) mit einem Auftragsgewicht von 30 bis 40 g/m² widerstehen kann. Auf den noch nassen Leim wird von der Rolle ein bedrucktes Dekorpapier aufgelegt und in einem Kalander mit 160 kN/cm und einer Walzentemperatur von 190°C aufgepresst. Danach wird im Spalt zwischen den einzelnen Platten das Papier geschnitten. Der Spalt zwischen den einzelnen in den Kalander eingeführten Platten wird so gesteuert, dass das Dekorpapier auf jeder Platte registergenau aufliegt. Durchschlagen des flüssigen Leims durch das Papier wird durch geeignete Einstellung des Leimauftrags und der Viskosität des Leims vermieden. Die Platten können dann durch einen Glättkalander geführt und/oder zur Entfernung anhaftenden Staubs gebürstet werden.

Die Platten werden waagerecht weiter gefördert. Nun wird auf das Dekorpapier auf der Oberseite der Platte mittels einer Auftragswalze (zwecks geringen Verschleißes aus Keramik) eine Schicht eines Melaminharzes in Wasser aufgetragen, die Teilchen von Aluminiumoxid (Korund) mit einer mittleren Größe von 180 - 220 µm enthält. Die Viskosität der Harzlösung beträgt 120 mPas bei einem Feststoffgehalt von 60 Gewichtsprozent. Das Auftragsgewicht der Harzlösung beträgt etwa 50 g/m², das des Korunds 15 - 20 g/m². Der Harzauftrag reicht nicht aus, um die Korundteilchen völlig zu bedecken. Das Harzauftragsgewicht entspricht einer Schichtdicke von etwa 40 µm (Dichte 1,25 g/cm³). Mittels eines IR-Strahlers wird der Harzauftrag so weit angetrocknet, dass seine Oberfläche staubtrocken ist und hinreichende Haftung am Dekorpapier besteht. Dabei wird ein Luftstrom über die Oberfläche der Harzschicht geführt. Gleichzeitig mit dem Harzauftrag auf die Oberseite wird ein gleicher Auftrag, jedoch ohne Korund, auf der Unterseite als Gegenzug angebracht und angetrocknet. Die Platte ruht beim Fördern zunächst auf einem Luftpolster und nach dem Antrocknen im Randbereich auf schmalen Rollen.

Nach dem Antrocknen wird eine weitere Schicht von etwa 50 g/m² des wässrigen Melaminharzes auf die Dekorseite und auf die Unterseite aufgetragen und wiederum angetrocknet. Dieser Vorgang wird noch bis zu dreimal wiederholt. Dadurch hat nun die Harzschicht eine Dicke von bis zu 250 µm und bedeckt die Korundteilchen völlig.

Die nun mit Nutzschicht und Gegenzug beschichtete Platte wird in eine KT-Presse gelegt und etwa 10 - 15 s bei einer Temperatur der Pressplatten von etwa 200 °C (entsprechend etwa 160 °C am Produkt) und einem Druck von 35 - 40 kN/cm2 gepresst. Dabei wird das dem Dekor entsprechende Oberflächenrelief eingeprägt (Synchronpore).

### Ausführungsbeispiel 2

MDF-Platten von etwa 2 x 3 m Größe werden gereinigt, geglättet und temperiert. Mittels einer Walzenbeschichtungsanlage wird ein saurer Härter für Harnstoff-Formaldehyd-Leim (Härter 2547-Akzo Nobel) mit einem Auftragsgewicht von etwa 8 g pro Quadratmeter bei Umgebungstemperatur aufgetragen und mit einem IR-Strahler leicht angetrocknet. Hierauf wird wiederum mit einer Walze eine Leimschicht von etwa 40 g pro Quadratmeter (Harnstoff-Formaldehydleim 1206-Akzo Nobel) aufgetragen. Auf die noch nasse Leimschicht wird von der Rolle ein cremefarbenes Druckbasispapier mit einem Flächengewicht von 60 g pro Quadratmeter aufgelegt und in einem Kalander mit 160 kN/cm und einer Walzentemperatur von 190 °C aufgepresst, wobei der Leim zumindest teilweise aushärtet. Dabei bleibt die Außenfläche des Papiers unverändert, das heißt, es schlägt kein Leim durch. Danach wird das Papier im Spalt zwischen den Platten geschnitten. Die Platten werden sofort zu einer Druckstation gefördert, in der eine erste Farbe des Dekors mittels indirekten Tiefdrucks aufgedruckt wird. In weiteren Druckstationen werden die zweite und die dritte Farbe aufgetragen, wobei kurzes Ablüften zwischen den Stationen ausreicht, um die Druckfarbe zu trocknen. Nun wird eine dünne Schicht eines Melamin-FormaldehydHarzes (MFH, etwa 10 g/m²) aufgetragen und mit einem IR-Strahler angetrocknet, bis die Oberfläche staubtrocken ist. In diesem Zustand können die Platten gestapelt beziehungsweise gelagert werden.

Die Weiterverarbeitung der dekorierten Platten erfolgt entweder unmittelbar nach dem Druck (ohne Auftragen der dünnen MFH-Schicht) oder nach Auftragen dieser Schicht und Lagerung durch Aufbringen der Deckschicht wie im Ausführungsbeispiel 1 beschrieben.

## Patentansprüche

1. Verfahren zur Herstellung eines dekorierten Laminats mit einem plattenförmigen Kern aus Holz oder Holzwerkstoff, einer Dekorschicht auf mindestens einer Seite des Kerns und einer Deckschicht aus Aminoplast auf der Dekorschicht, umfassend die Schritte
- Anbringen der Dekorschicht,
- Auftragen einer Schicht aus einer wässrigen Lösung einer Aminoplast-Vorstufe zur Bildung einer Deckschicht auf die Dekorschicht,
- zumindest teilweises Trocknen der Deckschicht,
- Aushärten des Aminoplastes unter Druck und Wärme,
**dadurch gekennzeichnet, dass** zunächst ein Teil der Lösung der Aminoplast-Vorstufe aufgetragen und die so erzeugte Teilschicht angetrocknet wird, wobei die Viskosität der aufgetragenen Teilschicht erhöht wird, jedoch keine Aushärtung oder Vernetzung stattfindet, und dieser Schritt mindestens zweimal wiederholt wird, um die endgültige Deckschicht zu bilden.

2. Verfahren nach Anspruch 1, **dadurch gekennzeichnet, dass** das Antrocknen der Teilschichten mit IR-Strahlung und/oder Warmluft erfolgt.

3. Verfahren nach Anspruch 1 oder 2, **dadurch gekennzeichnet, dass** das Aminoplast ein Melamin-Formaldehyd-Harz ist.

4. Verfahren nach Anspruch 1 bis 3, **dadurch gekennzeichnet, dass** eine wässrige Lösung des Aminoplastes mit mehr als 60 Gewichtsprozent Feststoff verwendet wird.

5. Verfahren nach Anspruch 4, **dadurch gekennzeichnet, dass** die aufgetragenen Teilschichten auf jeweils mehr als 80 Gewichtsprozent Feststoff getrocknet werden.

6. Verfahren nach Anspruch 4 oder 5, **dadurch gekennzeichnet, dass** die Viskosität der Lösung des Aminoplastes 100 bis 200 mPas beträgt.

7. Verfahren nach Anspruch 4 bis 6, **dadurch gekennzeichnet, dass** die Viskosität der Teilschichten mit der Schichtfolge ansteigt.

8. Verfahren nach Anspruch 1 bis 7, **dadurch gekennzeichnet, dass** zumindest mit der ersten aufgetragenen Teilschicht Teilchen eines harten Feststoffs aufgetragen werden.

9. Verfahren nach Anspruch 8, **dadurch gekennzeichnet, dass** die Teilchen des harten Feststoffs in der Lösung für die erste Teilschicht dispergiert sind.

10. Verfahren nach Anspruch 8, **dadurch gekennzeichnet, dass** die Teilchen des harten Feststoffs auf die erste Teilschicht vor dem Antrocknen aufgestreut werden.

11. Verfahren nach Anspruch 8 bis 10, **dadurch gekennzeichnet, dass** der harte Feststoff aus Aluminiumoxid, Siliziumdioxid, Siliziumcarbid, Bornitrid ausgewählt ist.

12. Verfahren nach Anspruch 8 bis 11, **dadurch gekennzeichnet, dass** die mittlere Teilchengröße des harten Feststoffs 180 bis 220 µm beträgt.

13. Verfahren nach Anspruch Ziffer 8 bis 12, **dadurch gekennzeichnet, dass** die Dicke der ersten Teilschicht kleiner als die mittlere Teilchengröße des harten Feststoffs ist, während die Dicke der gesamten Deckschicht größer als diese Teilchengröße ist.

14. Verfahren nach Anspruch 1 bis 13, **dadurch gekennzeichnet, dass** zumindest in der letzten Teilschicht Nanoteilchen inkorporiert sind.

15. Verfahren nach Anspruch 14, **dadurch** g**ekennzeichnet**, dass Nanoteilchen aus Aluminiumoxid oder Siliziumdioxid bestehen.

16. Verfahren nach Anspruch 14 oder 15, **dadurch gekennzeichnet, dass** die Nanoteilchen eine Größe von 5 bis 100 nm haben.

17. Verfahren nach Anspruch 1 bis 16, **dadurch gekennzeichnet, dass** zum Anbringen der Dekorschicht auf dem plattenförmigen Kern eine Schicht aus flüssigem Leim angebracht und auf diese ein Dekorpapier aufgelegt wird.

18. Verfahren nach Anspruch 1 bis 16, **dadurch gekennzeichnet, dass** zum Anbringen der Dekorschicht auf dem plattenförmigen Kern ein einfarbiges Papier aufgeleimt wird, das vor dem Auftragen der Deckschicht mit dem Dekor bedruckt wird.

19. Verfahren nach Anspruch 17 oder 18, **dadurch gekennzeichnet, dass** zum Aufleimen des Dekorpapiers oder einfarbigen Papiers ein Harnstoff-Formaldehyd-Leim verwendet wird.

20. Verfahren nach Anspruch 18, **dadurch gekennzeichnet, dass** zum Bedrucken ein direktes oder indirektes Tiefdruck-, ein Flexodruck-, ein Offsetdruck- oder ein digitales Druckverfahren angewendet wird.

21. Verfahren nach Anspruch 20, **dadurch gekennzeichnet, dass** das Bedrucken mittels Tintenstrahldruck erfolgt.

22. Verfahren nach Anspruch 1 bis 21, **dadurch gekennzeichnet, dass** gleichzeitig mit dem Anbringen der Dekorschicht und dem Auftragen der Deckschicht auf die der Dekorschicht gegenüberliegenden Seite des plattenförmigen Kerns ein Gegenzug angebracht wird.

23. Verfahren nach Anspruch 22, **dadurch gekennzeichnet, dass** der Gegenzug aus mehreren Teilschichten eines Aminoplastes gebildet wird, die jeweils vor dem Anbringen der nächsten Teilschicht angetrocknet werden.

24. Verfahren nach Anspruch 23, **dadurch gekennzeichnet, dass** die Teilschichten des Gegenzugs gleichzeitig mit den Teilschichten der Deckschicht aufgetragen und angetrocknet werden.

25. Verfahren nach Anspruch 22 bis 24, **dadurch gekennzeichnet, dass** vor dem Auftragen des Gegenzugs auf der der Dekorschicht gegenüberliegenden Seite des plattenförmigen Kerns eine Papierschicht angebracht wird.

26. Verfahren nach einem der Ansprüche 1 bis 25, **dadurch gekennzeichnet, dass** die Dekorschicht mit einem nicht durchschlagenden Leim angebracht wird, und beim Aushärten des Aminoplasts von diesem imprägniert wird.

## Claims

1. A method of producing a decorated laminate with a plate-shaped core made from wood or wood-based material, a decorative layer on at least one side of said core and a cover layer made from aminoplast on said decorative layer, comprising the steps:
- adding said decorative layer,
- applying a layer made from an aqueous solution of aminoplast precursor for forming a cover layer on said decorative layer,
- at least partial drying of said cover layer,
- hardening the aminoplast under pressure and heat,
**characterised in that** at first a part of said solution of aminoplast precursor is applied and the thus generated partial layer is pre-dried, wherein the viscosity of said applied partial layer is being increased while no hardening nor cross-linking occurs, and this step is repeated at least twice in order to form the final cover layer.

2. The method according to claim 1, **characterised in that** pre-drying of said partial layers is carried out using IR-radiation and/or hot air.

3. The method according to claim 1 or 2, **characterised in** said aminoplast is a melamine formaldehyde resin.

4. The method according to any one of claims 1 to 3, **characterised in that** an aqueous solution of aminoplast having more than 60% mass percentage of solid content is used.

5. The method according to claim 4, **characterised in that** said applied partial layers are pre-dried to a level of more than 80% mass percentage of solid content.

6. The method according to claim 4 or 5, **characterised in that** the viscosity of said solution of aminoplast amounts to 100 to 200 mPas.

7. The method according to one of claims 4 to 6, **characterised in that** the viscosity of said partial layers increases with the layer order.

8. The method according to any one of claims 1 to 7, **characterised in that** particles of a hard solid are applied at least when applying the first partial layer.

9. The method according to claim 8, **characterised in that** said particles of hard solid are dispersed in the solution of said first partial layer.

10. The method according to claim 8, **characterised in that** said particles of hard solid are scattered on said first partial layer before pre-drying.

11. The method according to any one of claims 8 to 10, **characterised in that** said hard solid is chosen from alumina, silicon dioxide, silicon carbide, boron nitride.

12. The method according to any one of claims 8 to 11, **characterised in that** the average particle size of said hard solid amounts to 180 to 220 µm.

13. The method according to any one of claims 8 to 12, **characterised in that** the thickness of said first partial layer is smaller than the average particle size of said hard solid, whereas the thickness of the complete cover layer is greater than said particle size.

14. The method according to any one of claims 1 to 13, **characterised in that** nano-particles are incorporated at least in the last partial layer.

15. The method according to any one of claims 14, **characterized in that** said nano-particles are made from alumina or silicon dioxide.

16. The method according to claim 14 or 15, **characterised in that** said nano-particles have a size of 5 to 100 nm.

17. The method according to any one of claims 1 to 16, **characterised in that** for adding said decorative layer on said plate-shaped core a layer of liquid glue is applied and a decorative paper is placed thereon.

18. The method according to any one of claims 1 to 16, **characterised in that** for adding said decorative layer on said plate-shaped core a monochrome paper is glued on, on which the decorative is printed before the cover layer is applied.

19. The method according to claim 17 or 18, **characterised in that** an urea formaldehyde glue is used for gluing on said decorative paper or said monochrome paper.

20. The method according to claim 18, **characterised in that** a direct or indirect process of gravure printing, flexographic printing, offset printing or digital printing process is used for printing.

21. The method according to claim 20, **characterised in that** printing is carried out by means of ink-jet printing.

22. The method according to any one of claims 1 to 21, **characterised in that** together with adding said decorative layer and applying said cover layer, a stabilising layer is added onto the opposite side of the plate-shaped core.

23. The method according to claim 22, **characterised in that** said stabilising layer is formed from several partial layers of a aminoplast, which are respectively pre-dried before applying the next partial layer.

24. The method according to claim 23, **characterised in that** said partial layers of said stabilising layer are applied and pre-dried together with the partial layers of said cover layer.

25. The method according to any one of claims 22 to 24, **characterised in that** a paper layer is added before applying said stabilising layer on the side of said plate-shaped core opposite to the decorative layer,.

26. Method according to any one of the claims 1 to 25, **characterised in that** the decorative layer is added with a non-penetrating glue, and is impregnated by the aminoplast during hardening.

## Revendications

1. Procédé de fabrication d'un stratifié décoratif avec une âme en forme de plaque en bois ou en matériau à base de bois, une couche décorative sur au moins un côté de l'âme et une couche de surface en aminoplaste sur la couche décorative, comprenant les étapes de
- mise en place de la couche décorative,
- application d'une couche en une solution aqueuse d'un précurseur d'aminoplaste pour former une couche de surface sur la couche décorative,
- séchage au moins partiel de la couche de surface,
- durcissement de l'aminoplaste sous pression et chaleur,
**charactérisé en ce que** dans un premier temps une partie de la solution du précurseur d'aminoplaste est appliquée et la couche partielle ainsi produite est préséchée, la viscosité de la couche partielle appliquée étant augmentée sans qu'un durcissement ou une réticulation n'ait lieu, et cette étape est répétée au moins deux fois pour former la couche de surface finale.

2. Le procédé selon la revendication 1, dans lequel le pré-séchage des couches partielles est effectué aux rayonnements infrarouge et/ou à l'air chaud.

3. Le procédé selon la revendication 1 ou 2, dans lequel l'aminoplaste est une résine mélamine-formaldéhyde.

4. Le procédé selon l'une des revendications 1 à 3, **caractérisé en ce qu'**une solution aqueuse de l'aminoplaste est utilisée avec un pourcentage massique de plus de 60 en solide.

5. Le procédé selon la revendication 4, dans lequel les couches partielles appliquées sont séchées respectivement sur un pourcentage massique de plus de 80 en solide.

6. Le procédé selon la revendication 4 ou 5, dans lequel la viscosité de la solution de l'aminoplaste est de 100 à 200 mPas.

7. Le procédé selon l'une des revendications 4 à 6, dans lequel la viscosité des couches partielles croît avec la succession des couches.

8. Le procédé selon l'une des revendications 1 à 7, dans lequel des particules d'un solide dur sont appliquées au moins avec la première couche partielle appliquée.

9. Le procédé selon la revendication 8, **caractérisé en ce que** les particules du solide dur sont dispersées dans la solution pour la première couche partielle.

10. Le procédé selon la revendication 8, dans lequel les particules du solide dur sont éparpillées sur la première couche partielle avant le pré-séchage.

11. Le procédé selon l'une des revendications 8 à 10, **caractérisé en ce que** le solide dur est sélectionné parmi oxyde d'aluminium, dioxyde de silicium, carbure de silicium, nitrure de bore.

12. Le procédé selon l'une des revendications 8 à 11, **caractérisé en ce que** la taille moyenne des particules du solide dur est de 180 à 220 µm.

13. Le procédé selon l'une des revendications 8 à 12, **caractérisé en ce que** l'épaisseur de la première couche partielle est inférieure à la taille moyenne des particules du solide dur, tandis que l'épaisseur de la couche de surface entière est supérieure à cette taille de particules.

14. Le procédé selon l'une des revendications 1 à 13, **caractérisé en ce que** des nanoparticules sont intégrées au moins dans la dernière couche partielle.

15. Le procédé selon la revendication 14, **caractérisé en ce que** les nanoparticules sont constituées d'oxyde d'aluminium ou de dioxyde de silicium.

16. Le procédé selon la revendication 14 ou 15, **caractérisé en ce que** les nanoparticules ont une taille de 5 à 100 nm.

17. Le procédé selon l'une des revendications 1 à 16, **caractérisé en ce que**, pour la mise en place de la couche décorative sur l'âme en forme de plaque, on met en place une couche de colle liquide et sur celle-ci on pose un papier décoratif.

18. Le procédé selon l'une des revendications 1 à 16, **caractérisé en ce que**, pour la mise en place de la couche décorative sur l'âme en forme de plaque, on accolle un papier ordinaire que l'on imprime avec le décor avant d'appliquer la couche de surface.

19. Le procédé selon la revendication 17 ou 18, **caractérisé en ce qu'**on utilise une colle en urée-formaldéhyde pour accoller du papier décoratif ou du papier ordinaire.

20. Le procédé selon la revendication 18, **caractérisé en ce qu'**on utilise pour l'impression un processus direct ou indirect d'impression en héliogravure, d'impression flexographique, d'impression offset ou d'impression numérique.

21. Le procédé selon la revendication 20, **caractérisé en ce que** l'impression est effectué à jet d'encre.

22. Le procédé selon l'une des revendications 1 à 21, **caractérisé en ce qu'**en même temps que la mise en place de la couche décorative et l'application de la couche de surface sur le côté de l'âme en forme de plaque qui est opposé à la couche décorative, un contreparement est mis en place.

23. Le procédé selon la revendication 22, **caractérisé en ce que** le contreparement est formé de plusieurs couches partielles d'un aminoplaste, qui sont respectivement pré-séchées avant l'application de la couche partielle suivante.

24. Le procédé selon la revendication 23, **caractérisé en ce que** les couches partielles du contreparement sont appliquées et pré-séchées en même temps que les couches partielles de la couche de surface.

25. Le procédé selon l'une des revendications 22 à 24, **caractérisé en ce qu'**avant l'application du contreparement une couche de papier est appliquée sur le côté de l'âme en forme de plaque qui est opposé à la couche décorative.

26. Procédé selon l'une des revendications 1 à 25, **caractérisé en ce que** la couche décorative est mise en place en utilisant une colle non-pénétrant et qu'elle est imperméabilisée pendant le durcissement de l'aminoplaste par celui-ci.
